# EUROPEAN PATENT APPLICATION

(11) **EP 1 422 269 A1**
(43) Date of publication of application: **26.05.2004**
(21) Application number: 03103977.9
(22) Date of filing: 27.10.2003
(51) Int. Cl.: C09D 5/03, C08G 18/62

(54) **Improved fluorocarbon polymer coating powders**

(30) Priority: 20.11.2002 US 300216
(71) Applicant: Spraylat Corporation, Pelham, New York 10803 (US)
(72) Inventor: Kim, Young Jun, Denton 76210 (US)
(74) Representative: Weber, Dieter, Dr. Dipl.-Chem.

(57) **Abstract**

Coating properties such as corrosion resistance and mechanical properties including flexibility, impact resistance, hardness, and adhesion, are improved through the use of the thermosetting fluorocarbon polymer coating powders of the invention.

## Description

The present invention is directed to thermosetting fluorocarbon polymer coating powder compositions and cured coatings formed from such powders. Coating properties such as corrosion resistance and mechanical properties, including flexibility, impact resistance, hardness, and adhesion, are improved through use of the coating powders of the invention.

### BACKGROUND OF THE INVENTION

Polyvinylidene fluoride (PVDF) has long been used in liquid coatings for architectural uses because of its high performance with regard to ultraviolet radiation, chalking, chemical resistance, and corrosion. These products have been sold under the names Kynar and Hylar. Developing polyvinylidene fluoride with suitable coating properties in coating powders, however, has proven difficult.

The following patents discussed below are typical of efforts in this field.

United States Patent No. 6,221,429 (Verwey et al.) discloses a process for making and applying a coating powder having controlled gloss properties. The method comprises blending a mixture of a resin consisting of 60-90 wt% of a fluorine-based terpolymer, having a melting point less than 150° C, and 40-10 wt% of a compatible thermoplastic acrylic resin mixed with the terpolymer to provide a product. The product has temperature-dependent gloss characteristics in which the product, when baked on a substrate surface at a variable temperature within the range of 140-220° C, produces a gloss when measured in accordance with ISO-2813 at an angle of 60°, which is inversely proportional to temperature when baked on a substrate surface over a temperature interval within the range of 140-220° C. The coating powder is then applied to a substrate surface and baked.

United States Patent No. 6,090,890 (Murakami et al.) discloses a resin composition for powder paints. The composition comprises (A) an epoxy-functional branched organopolysiloxane having a softening point in a range of room temperature to 150° C; and (B) a compound selected from the group consisting of acrylic resins containing aromatic vinyl monomer units in an amount of from 5-70 wt% and fluororesins. The compound bears a functional group reactive with the epoxy group and is solid at room temperature. The weight ratio between component (A)/component (B) is in a range of 2/98 to 98/2, and the resin composition produces a cured coating in which component (A) reacts with component (B).

United States Patent No. 5,998,507 (Adachi et al.) discloses a method for preparing a thermosetting coating powder. The manufacturing process comprises dispersing and mixing a base resin and a crosslinking agent in a machine equipped with a decompression device at a temperature in the range of 40-200° C to form a dispersed mixture. The dispersed mixture optionally contains a solvent and a pigment, and a portion of the solvent may be removed under reduced pressure. The method further comprises adding water to the dispersed mixture, reducing the pressure and lowering the temperature of the dispersed mixture and bringing the dispersed mixture into a powder/granular state by dispersion.

United States Patent No. 5,827,608 (Rinehart et al.) discloses a method of forming a thermoplastic layer on a flexible substrate having two major opposing surfaces. The method comprises providing a thermoplastic powder having a melt flow index of at least 0.008 grams/10 minutes and comprising a (meth)acrylate polymer and a fluoropolymer, the weight ratio of the (meth)acrylate polymer to the fluoropolymer ranges from 1:1 to 99:1. The powder is then applied in the absence of solvents to a major surface of the substrate to form a particle layer. The substrate is then subjected to elevated heat and pressure until the powder in the particle layer is fused into a continuous layer that is bonded to the substrate. Heat and pressure are applied simultaneously by passing the coated substrate through a heated nip configuration comprising a heated roll having an outer surface and a backup roll.

United States patent No. 5,599,873 (Verwey et al.) discloses a fluorinated coating powder for galvanized steel. The fluorinated powder coating product consists of a resin component admixed with a pigment. The resin component consists of from 60-90 wt% of a vinylidene fluoride copolymer, having a melting temperature below about 150° C and a melt viscosity greater than about 400 Pa-s at 100 sec-1 and 232° C but less than about 1,000 Pa-s at 100 sec-1 and 232° C and from 40-10 wt% of a compatible resin. The pigment is present in an amount of 1-35 parts per 100 parts by weight of the resin component.

United States Patent No. 5,439,896 (Ito et al.) discloses a thermosetting powdery coating composition comprising a mixture of a fluorine containing copolymer and a curing agent. The fluorine containing copolymer is present in 40 to 98 parts and is selected from the group consisting of tetrafluoroethylene, chlorotrifluoroethylene, trifluoroethylene, hexafluoropropylene, and pentafluoropropylene and having at least one crosslinkable reactive group selected from the group consisting of carboxyl, glycidyl, amide, and isocyanates. The copolymer has a fluorine content of at least 10% by weight, an intrinsic viscosity which is determined at 30° C in tetrahydrofuran of 0.05 to 2 dl/g, a glass transition temperature of 35-120° C, and a weight loss by heating at 105° C for three hours which does not exceed 2%. The curing agent is present in from 60-2 parts and is capable of forming crosslinks by reacting with the crosslinkable reactive groups in the fluorine containing copolymer. The curing agent is selected from the group consisting of acid anhydrides of aliphatic dibasic acids, phthalic anhydride, trimellitic anhydride, pyromellitic anhydride, polyester resins having an acid value from 10 to 300 mg KOH/g, acrylic resins having an acid value from 10 to 300 mg KOH/g, dicyandiamide compounds, imidazole compounds, dibasic acid dihydrazides, amine compounds, glycidyl containing compounds, 1,4 bis(2'-hydroxyethoxyl)benzene, bis(hydroxyethyl) terephthalate, copolymers of styrene and allyl alcohol spiroglycol and tris)2-hydroxyethyl)isocyanurate.

United States Patent No. 5,244,944( Bott et al.) discloses a thermosetting powder coating composition. The composition comprises an epoxy-functional resin having a molecular weight of about 300 to about 4,000, and having approximately 0.05 to about 0.99, epoxy groups per 100g of resin; a carboxy or anhydrided functional crosslinking compound; and a quaternary ammonium slat or hydroxide. The quaternary ammonium salt or hydroxide is selected from the group consisting of dioctadecyldimethyl ammonium hydroxide, dioctadecyldimethyl ammonium chloride, dioctadecyldimethyl ammonium bromide, dioctadecyldiethylammonium hydroxide, dioctadecyldiethyl ammonium chloride, dioctadecyldipropyl ammonium hydroxide, and dioctadecyldipropyl ammonium chloride.

United States Patent No. 5,229,460 (Yousuf et al.) discloses a process for preparing a thermoplastic polymer based powder. The process comprises mixing a poly(vinylidene fluoride) polymer with a compatible acrylic polymer with units derived from acrylates or methacrylates; heating the mixture to obtain a molten mixture; and slow cooling the molten mixture to ambient temperature, without quenching or subjecting the mixture that is cooled to ambient temperature to a subsequent annealing step, to obtain a solid mass having a degree of crystallinity of at least 85%. The solid mass is then ground into particles at a temperature higher than -50° C.

United States Patent No. 5,177,150 (Polek) discloses a coating powder composition comprising a resin component, a thermoplastic acrylic resin, and a pigment component. The resin component comprises from about 50-90 wt% vinylidene fluoride/hexafluoropropylene copolymer resin having a melting point in the range of from about 160-170° C and a melt viscosity of from 1-4 kilopoise measured at 100 sec-1 and 232° C. The thermoplastic acrylic resin is present in 10-50 wt%. The pigment component comprises from 5-30 parts of at least one pigment per 100 parts by weight of resin component.

United States Patent No. 5,147,934 (Ito et al.) discloses a thermosetting powdery coating composition comprising a fluorine containing copolymer and a blocked isocyanates compound. The fluorine containing copolymer is present in 40-98 parts and is a monomeric moiety derived from a fluorolefin compound and having hydroxyl groups as the crosslinkable reactive groups of which the content of fluorine is at least 10% by weight, the intrinsic viscosity determined at 30° C in tetrahydrofuran is in the range from 0.05 to 2 dVg, the glass transition temperature is in the range from 35-120° C and the weight loss by heating does not exceed 2%. The blocked isocyanates compound is a curing agent capable of forming crosslinks by reacting with the crosslinkable reactive groups in the fluorine containing copolymer and is present in from 60-parts by weight.

United States Patent No. 5,093,427 (Barber) discloses a process for producing a vinylidene fluoride hexafluoropropylene copolymer by the emulsion polymerization of vinylidene fluoride and hexafluoropropylene in a stirred aqueous reaction medium. The process comprises charging to a reactor: water, vinylidene fluoride, an initiator to start the polymerization, and a water-soluble surfactant capable of emulsifying both the initiator and the reaction mass during the polymerization. Additional amounts of vinylidene fluoride and initiator are fed to continue polymerization of the vinylidene fluoride until from about 50% to about 90% of the total weight of vinylidene fluoride utilized in the process has been added to the reaction medium. To the reaction medium is then added for further polymerization: from 1-20% hexafluoropropylene by weight, based upon the combined weight of the hexafluoropropylene and the total weight of vinylidene fluoride added to the reaction medium in the process, and the balance of the vinylidene fluoride utilized in the process.

United States Patent No. 5,030,394 (Sietses et al.) discloses a process for preparing pigmented PVdF-based powder coating products. The process comprises mixing PVdF resin with at least one compatible thermoplastic PMMA resin, a minor amount of a low molecular weight acrylic polymer as a flow improver, and a minor amount of at least one pigment. The weight ratio of PVdF-PMMA is from about 80-20 to 40-60. The mixture is then pelletized and ground at a temperature below about -50° C to form a particulate powder having an average particle size between about 0.03-0.05 mm.

United States Patent No. 4,690,968 (Mitani et al.) discloses a fluoroolefin copolymer having an inherent viscosity from 0.05 to 2.0 dl/g and composed of (I) 10 to 70 mole % of monomeric units derived from a fluoroolefin, (II) 5 to 60 mole % of monomeric units derived from a vinyl carboxylate, (III) 5 to 70 mole % of monomeric units derived from a vinyl ether, and (IV) 0 to 30 mole % of monomeric units derived from a hydroxyl-containing vinyl ether.

United States Patent No. 4,446,259 (Vasta) discloses a coating composition comprising about 10-80% by weight of a film forming binder and 20-90% by weight of a liquid carrier. The liquid carrier is selected from the group consisting of organic solvent for the binder, aqueous liquid or a blend of solvent, and nonsolvent for the binder. The binder consists of a blend of about 20-90% by weight, of an acrylic polymer consisting of about 10-50% by weight, of polymerized glycidyl methacrylate or glycidyl acrylate and 50-90% by weight of other polymerized ethylenically unsaturated monomers selected from the group consisting of alkyl methacrylate having 1-12 carbon atoms, alkyl acrylate having 1-12 carbon atoms, styrene, and alkyl substituted styrenes. The acrylic polymer has a weight average molecular weight of about 10,000-100,000, a number average molecular weight of about 2,000-20,000 and a molecular weight distribution of about 2-5 and a glass transition temperature of about 20-50° C. The binder further consists of 10-80% by weight, of a crosslinkable polysiloxane having alkyl groups individually selected from the group consisting of alkyl group having 1-6 carbon atoms, hydroxyl group and phenyl group and contains sufficient hydroxyl groups to provide a silanol content of about 0.5-7% by weight.

United States Patent No. 4,916,188 (Reising) describes a coating powder composition containing a thermosetting polymeric binder. The thermosetting polymeric binder comprises a hydroxyl functional fluorocarbon copolymer of copolymerized monomers comprising hydroxy alkyl vinyl ether and fluorolefin. The fluorocarbon copolymer contains between 1% and 30% mole percent hydroxy alkyl vinyl ether and is produced by copolymerizing the monomers in the absence of water. A blocked diisocyanate is included which coreacts and crosslinks with the functional fluorocarbon copolymer. A functionally reactive hydroxyl acrylic copolymer or hydroxyl polyester copolymer is also included which coreacts with the blocked isocyanates. The binder comprises on a weight basis between 20% and 86% functional fluorocarbon polymer, between 0% and 60% functionally reactive hydroxyl acrylic polymer or hydroxyl functional polyester polymer, and between 10% and 40% the blocked diisocyanate crosslinker. The fluorocarbon polymer coating of Reising differs significantly from that of the present invention because Reising's hydroxyl additive reacts with the hydroxyl functional fluorocarbon polymer, and the additives of the invention do not so react.

The coating powder and resultant coating of the invention is believed to constitute an improvement in the field of fluorocarbon coating powders because the addition of certain ingredients result in significant improvements in coating properties.

### SUMMARY OF THE INVENTION

The present invention is directed to coating powders and resultant coatings formed by such coating powders that are based upon thermosetting fluorocarbon polymers having hydroxyl functional groups. An effective amount of blocked or unblocked diisocyanate curing agent is added to react with the hydroxyl group and effect curing. In one aspect, a thermoplastic fluorocarbon is added to the coating powder to enhance corrosion resistance, flexibility, and adhesion of the resultant coating. In another aspect, mechanical properties of the resultant coating are enhanced by adding a modifying ingredient that does not react with the thermosetting fluorocarbon polymer. Such modifying ingredients may include functionally reactive carboxyl acrylic polymers, functionally reactive carboxyl polyester polymers, glycidyl methacrylate (GMA), or admixtures thereof. The modifying ingredients do not react with the diisocyanate constituent and thus require a crosslinker such as triglycidyl isocyanurate (TGIC) for the carboxyl acrylic polymer or carboxyl polyester polymer, and dicarboxylic acid for the GMA.

In another aspect, a thermosetting fluorocarbon polymer having major amounts of hydroxyl (-OH) and minor amounts of carboxyl (-COOH-) groups is utilized in the coating powder and resultant coating. Such polymer is cured with use of two curing agents. For example, such curing agents may be diisocyanate for reaction with the hydroxyl groups and triglycidyl isocyanurate for reaction with the carboxyl groups. Coatings containing two curing agents exhibit superior flexibility and improved impact resistance when contrasted with the same thermosetting fluorocarbon coating powder cured only with diisocyanate.

The above-discussed aspects regarding the use of thermoplastic fluorocarbon polymers, nonreactive ingredients, and multiple curing agents may be utilized separately or in any combination thereof with each other to achieve individual or combined beneficial effects of each aspect.

### DETAILED DESCRIPTION OF THE INVENTION

The coating powders and coatings of the invention are based upon thermosetting fluorocarbon polymers having major amounts of hydroxyl groups and minor amounts of carboxyl groups. The hydroxyl groups are cured with an isocyanate curing agent, such as isophorone diisocyanate (IPDI) or tetramethoxymethyl glycoluril (TMMGU), and the carboxyl groups with a suitable secondary curing agent, such as TGIC or hydroxyl alkylamide (HAA).

While coatings may be made from the thermosetting fluorocarbon polymer described above, improvement to important coating properties such as corrosion resistance; surface appearance (roughness); and mechanical properties including flexibility, impact resistance, hardness, and adhesion, are desirable. The above properties are important for decorative as well as architectural applications. Such improved properties are obtained through the incorporation of additional ingredients to the fluorocarbon polymer base materials.

Hydroxyl functional reactive fluorocarbon polymers typically comprise copolymerized ethylenically unsaturated monomers containing carbon-to-carbon double bond unsaturation including minor amounts of hydroxylated vinyl monomers and major amounts of fluorocarbon monomers.

A suitable functionally reactive hydroxyl fluorocarbon polymer comprises a copolymer of a hydroxyalkyl vinyl ether and a fluorolefin such as tetra- or trifluoroethylene. Also contemplated are reactive fluorocarbon polymers which comprise a terpolymer of alkyl vinyl ether, hydroxalkyl vinyl ether, and a fluoroalkylene such as tetra- or trifluoroethylene. Copolymer chains are believed to be a blocked copolymer of alternating units of trifluoroethylene and vinyl ether with pendant side chain structures containing hydroxyl functionality due to the hydroxyalkyl vinyl ethers. Fluorocarbon copolymers or terpolymers may comprise by mole percent between 30% and 70% fluorolefin and between 30% and 70% vinyl ether units including hydroxyalkyl vinyl ether units. Fluorolefins may include tetrafluoroethylene, trifluoroethylene and chlorotrifluoroethylene. Alkyl vinyl ethers may include linear or branched chain aliphatic alkyls having from 2 to 8 carbon atoms such as methyl vinyl ether, ethyl vinyl ether, isopropyl vinyl ether, n-butyl vinyl ether, and similar lower alkyl vinyl ethers. Hydroxy alkyl-vinyl ethers are similar alkyl vinyl ethers containing a substituted hydroxyl group on the alkyl chain. Hydroxy vinyl ether units comprise between 1% and 30% by mole percent of the hydroxyl functional fluorocarbon polymer. The hydroxy value of the hydroxyl functional fluorocarbon polymer is between 2 and 200 and preferably between 5 and 150. Suitable hydroxyl fluorocarbons are terpolymers of alkyl vinyl ether, hydroxyalkyl ether, and trifluoroethylene copolymer sold commercially and known as Lumiflon Polymers. A particularly preferred Lumiflon Polymer is LF-200 D as described in published European Patent Application 0 186 186.

United States Patent No. 4,916,188 states that it prefers that hydroxyl functional fluorocarbon polymers contain copolymerized monomeric units comprising by mole percent between 45% and 48% fluorocarbon monomer, between 1% and 30% and preferably between 2% and 5% hydroxy alkyl vinyl ether monomer, with the balance being alkyl vinyl ether monomer. The functional fluorocarbon polymer is a solid at ambient temperatures and has a softening point or Tg above about 35° C and preferably between 35° C and 50° C with a number average molecular weight between 8,000 and 16,000 and preferably between 10,000 and 14,000, as measured by GPC (gel permeation chromatography) ASTM D 3016, D 3536-76, and D 3593-80. Such type of fluorocarbon polymer is also suitable for use in the present invention. Such polymer is designated as LF-200D and sold by Asahi Glass Co., Japan.

The present invention may utilize a functionally reactive hydroxyl and carboxyl fluorocarbon polymer having the molecular structure: 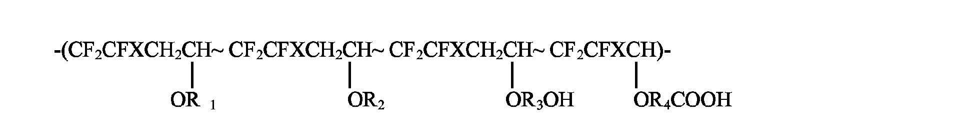 Wherein R1-R4: (a) are independent alkyl radicals having from 1 to 17 carbon atoms; (b) a blocked or unblocked diisocyanate that coreacts and crosslinks with the fluorocarbon polymer upon heat curing the powder coating; and (c) a functionally reactive carboxyl group may react with an epoxy functional curative such as TGIC.

The functionally reactive hydroxyl fluorocarbon polymer has a number average molecular weight from about 8,000 to about 16,000; more preferably the fluorocarbon polymer has a number average molecular weight from about 9,000 to about 13,000; and most preferably, the fluorocarbon polymer has a number average molecular weight from about 10,000 to about 11,000.

A preferred functionally reactive hydroxyl fluorocarbon polymer employed in the powder coating composition is LF-710F, manufactured by Asahi Glass Co., Japan. LF-710F has OH#: 46 +/-5, Tg 55, average molecular weight: 10,000, and a melting point of 100° C. LF-710F has an alternating sequence of carbon and fluorine and provides superior weathering performance. Such polymer has both hydroxyl and carboxyl reactive groups, with the majority of such groups having a hydroxyl function. Thus, adding a secondary curing agent may be advantageously utilized for such polymers in accordance with the present invention.

Blocked or unblocked diisocyanate, when added to the coating powders of the invention, coreacts and crosslinks with the fluorocarbon polymer upon thermal curing the powder. Preferred isocyanates are blocked diisocyanates which become unblocked and activated under heat and at temperatures approximately above the melt temperature of the powder coating composition. Latent blocked isocyanates crosslinking agents may be derived from a wide variety of isocyanates and/or mixtures thereof. Nonlimiting examples include isophorone diisocyanate; 2,4-tolylene diisocyanate; 2,6-tolylene diisocyanate; alkylene diisocyanates such as 1,4-tetramethylene-diisocyanate; 1,6-hexamethylene diisocyanate; 1,12-dodecane diisocyanate; cyclobutane and cyclohexane (1,3- and 1,4-) diisocyanates; phenylene diisocyanates (1,3- and 1,4-) and naphthalane-1,5-diisocyanate. Suitable blocking agents include alcohols, phenol, ketoximes, and the like. Especially preferred blocking agents are 2-ethylhexyl alcohol and caprolactam. Preferred isocyanates include isophorone diisocyanate adduct with a polyol such as trimethylolpropane and blocked with caprolactam and an urethdione linked isophorone diisocyanate known as Huls BF 1540. Unblocked isocyanates being free from blocking agent and containing an urethdione linkage can be used in combination with a blocked isocyanate.

Other useful diisocyanates include ethylene diisocyanate; ethylidene diisocyanate; propylene diisocyanate; 3-isocyanatomethyl-3,5,5-trimethylcyclohexyl isocyanates; 3-isocyanatomethyl-3,5,5-trimethylcyclohexyl isocyanates cyanurate; butylenes diisocyanate; hexamethylene diisocyanate; toluene diisocyanate; cyclopentylene-1,3,-diisocyanate; cyclohexylene-1,4-diisocyanate; cyclohexylene-1,2-diisocyanate; 4,4'-diphenylmethane diisocyanate; 2,2-diphenylpropane-4,4'-diisocyanate; p-phenylene diisocyanate; m-phenylene diisocyanate; xylylene diisocyanate; 1,4-naphthylene diisocyanate; 1,5-naphthylene diisocyanate; diphenyl-4,4'-diisocyanate; azobenzene-4,4'-diisocyanate; diphenylsulphone-4,4'-diisocyanate; dichlorohexamethylene diisocyanate; furfurylidene diisocyanate; isophorone diisocyanate; and 1-chlorobenzene-2,4-diisocyanate.

When fluorocarbon polymers, such as LF-710F, contain both hydroxyl functional groups and carboxyl functional groups are used, it may be advantageous to include an effective amount of primary (hydroxyl groups) and secondary (carboxyl) curing agents to effect curing of the fluorocarbon polymer. Typically, effective amounts for primary curing agents are from about 5 wt% to about 30 wt%, based upon weight of the coating powder. Typically, effective amounts of secondary curing agents are from about 0.5 wt% to about 5 wt%, based upon weight of the coating powder.

An embodiment of the invention that leads to improved corrosion resistance of a coated substrate includes incorporating thermoplastic fluorocarbon into the thermosetting fluorocarbon/curing agent(s) base composition. The thermoplastic fluorocarbon polymer is typically present in an amount from about 5 wt% to about 40 wt%, based upon weight of the coating powder. A thermoplastic fluorocarbon incorporated in amounts of 25 wt% or less leads to a highly desirable combination of corrosion resistance and flexibility and is thus preferred. On the other hand, incorporation of thermosetting fluorocarbon polymers in amounts of about 25 wt% to about 40 wt%, based upon weight of the coating powder, results in a roughened decorative coating appearance (when desired) as well as improved corrosion resistance.

Thermoplastic fluorocarbon polymers are well known in the art and include, for example, Kynar and Hynar.

The following comparative examples illustrate the above improvement in corrosion resistance and mechanical properties of the coating discussed above.

### EXAMPLE 1

| **THERMOSETTING FLUOROCARBON AND THERMOPLASTIC FLUOROCARBON MIXTURE** | | | |
|---|---|---|---|
| **INGREDIENT** | **SAMPLE A** | **SAMPLE B** | **SAMPLE C** |
| LF-710F Thermosetting fluorocarbon polymer (Asahi Glass) | 600 | 480 | 455 |
| B1530 Isophorone diisocyanate (Huls) | 150 | 120 | 100 |
| MP3 or MP6 Thermoplastic fluorocarbon polymer (Ausimont) | --- | 150 | 245 |
| **PROCESSING**: Electrostatic sprayed on substrates listed below to obtain coating thicknesses of 1.8-2.22 mils, except for chromated aluminum Q-panels where a coating thickness of 2.0-3.0 mils was used, and then cured at 400° F for 15 minutes | | | |

| **TEST** | **TEST RESULTS** | | |
|---|---|---|---|
| **Flexibility** (ASTM D522) | **SAMPLE A** | **SAMPLE B** | **SAMPLE C** |
| Non-pretreated aluminum Q-panel | ½" | <½" | <½" |
| | Fail | Pass | Pass |
| | Severe cracks | No cracks | No cracks |
| | Adhesion loss | | |
| Non-treated cold roll steel Q-panel | ½" | <½" | <½" |
| | Slight cracks | Pass | Pass |
| | Pass tape pull | No cracks | No cracks |
| | test | | |
| Pretreated chromated aluminum Q-panel | ½" | <½" | <½" |
| | Slight cracks | Pass | Pass |
| | Pass tape pull | No cracks | No cracks |
| | test | | |
| Pretreated cold roll steel Q-panel (B1000) | ½" | <½" | <½" |
| | Slight cracks | Pass | Pass |
| | Pass tape pull | No cracks | No cracks |
| | test | | |

| **CONCLUSION: Improves flexibility** | | | |
|---|---|---|---|
| **Adhesion** (ASTM D3359) | **SAMPLE A** | **SAMPLE B** | **SAMPLE C** |
| Non-treated aluminum Q-panel | 2B | 5B | 5B |
| Non-treated steel Q-panel | 5B | 5B | 5B |
| Pretreated chromated aluminum Q-panel | 5B | 5B | 5B |
| Pretreated iron phosphated cold roll steel Q-panel | 5B | 5B | 5B |

| **CONCLUSION: Improves adhesion** | | | |
|---|---|---|---|
| **Salt Fog Test** (ASTM B 117) | **SAMPLE A** | **SAMPLE B** | **SAMPLE C** |
| 4000 hrs Creepage | 2 mm | <0.5 mm | <0.5 mm |
| 4000 hrs Blisters | None | None | None |

| **CONCLUSION: Improves corrosion resistance** | | | |
|---|---|---|---|
| **QUV Test** (ASTM D4587) | **SAMPLE A** | **SAMPLE B** | **SAMPLE C** |
| Initial Gloss (60 deg) | 49 | 30 | 39 |
| 2000 hrs | 46 | 33 | 44 |
| 3000 hrs | 50 | 33 | 42 |
| 4000 hrs | 49 | 33 | 42 |
| **CONCLUSION: No chalking, color change, or gloss reduction, after 4000 hrs exposure in QUV (UVB 313)** | | | |

A second embodiment of the invention includes incorporating a modifying ingredient(s) into the thermosetting fluorocarbon polymer/curing agent(s) base material. Such incorporation results in an improvement to the mechanical properties, such as impact resistance, flexibility, and hardness, of the coating. Crosslinking with use of another crosslinker is required because the diisocyanate constituent of the coating powder does not react with and crosslink with a modifying ingredient such as a functionally reactive carboxyl acrylic polymer, a functionally reactive carboxyl polyester polymer, GMA, polyanhydrides, glycidyl functional acrylics, or admixtures thereof. In this regard, an effective amount of TGIC should be added to effect crosslinking with the carboxyl acrylic and/or carboxyl polyester polymers. Such crosslinking is effected through a TGIC link. An effective amount of a crosslinker, such a dicarboxylic acid or dodecanedioic acid (DDDA), is added to the coating powder to effect crosslinking with GMA when GMA is contained in the powder. GMA crosslinking is through an epoxy link.

Carboxyl acrylic polymers, carboxyl polyester polymers, GMA, polyanhydrides, and glycidyl functional acrylics are included in the coating powders of the invention in amounts of from about 5 wt% to about 40 wt%, based upon weight of the coating powder.

Suitable carboxyl acrylic polymers include SCX 815, SCX 817, SCX 819, SCX 820, SCT 821, and SCX 822 (SC Johnson Polymer).

Suitable carboxyl polyester polymers include CC630 (UCB), CC2988 (UCB), VAN 9959 (Solutia), and SP6400 (Sun Polymer).

Suitable polyanhydrides include VXL1381 (Solutia), VSC1436 (Solutia), VSC1438 (Solutia), and VXL9827 (Solutia).

Suitable glycidyl functional acrylics include A-229-30A (Reichhold), A-244-A (Reichhold), and A-249-A (Reichhold).

These materials can be used as a hardener and/or an additive. Inclusion of such materials in conjunction with other coating powder ingredients can result in a maximum impact resistance up to about 160 in-lb.

The following comparative examples illustrate the above improvement in mechanical properties of the coating discussed above.

### EXAMPLE2

| **THERMOSETTING FLUOROCARBON POLYMER AND CARBOXYL FUNCTIONAL POLYESTER RESIN AND GMA ACRYLIC RESIN** | | | | | |
|---|---|---|---|---|---|
| **INGREDIENT** | **SAMPLE A** | **SAMPLE B** | **SAMPLE C** | **SAMPLE D** | **SAMPLE E** |
| LF-710F Thermosetting fluorocarbon polymer (Asahi Glass) | 650 | 300 | 400 | 400 | 350 |
| B1530 Isophorone diisocyanate (Huls) | 160 | 75 | 100 | 133 | 116 |
| CC630 Carboxyl polyester polymer (UCB) | --- | 350 | 300 | --- | --- |
| PT810 TGIC (Ventico) | --- | 10 | 10 | --- | --- |
| A266 GMA acrylic resin (Reichhold) | --- | --- | --- | 261 | 130 |
| Dodecanedioic acid (Dupont) | --- | --- | --- | 39 | 20 |
| **PROCESSING:** Electrostatic sprayed on substrates listed below to obtain coating thicknesses of 1.8-2.22 mils except for chromated aluminum Q-panels where a coating thickness of 2.0-3.0 mils was used, and then cured at 400° F for 15 minutes | | | | | |

| **TEST** | | | **TEST RESULTS** | | |
|---|---|---|---|---|---|
| **Flexibility** (ASTM D522) | **SAMPLE A** | **SAMPLE B** | **SAMPLE C** | **SAMPLE D** | **SAMPLE E** |
| Non-treated aluminum Q-Panel | ½" | ¼" | ¼" | ¼" | ¼" |
| | Fail | Pass | Pass | Pass | Pass |
| | Severe | | | | |
| | cracks and | | | | |
| | adhesion | | | | |
| | loss | | | | |
| Non-treated cold roll steel Q-Panel | ½" | ¼" | ¼" | ¼" | ¼" |
| | Slight cracks | Pass | Pass | Pass | Pass |
| | Pass tape | | | | |
| | pull test | | | | |
| Chromated aluminum Q-panel (Aladine) | ½" | ¼" | ¼" | ¼" | ¼" |
| | Slight cracks | Pass | Pass | Pass | Pass |
| | Pass tape | | | | |
| | pull test | | | | |
| Iron phosphated cold roll steel Q-panel (B1000) | ½" | ¼" | ¼" | ¼" | ¼" |
| | Slight cracks | Pass | Pass | Pass | Pass |
| | Pass tape | | | | |
| | pull test | | | | |

| **CONCLUSION: Improves flexibility** | | | | | |
|---|---|---|---|---|---|
| **Impact Resistance** (ASTM D2794) | **SAMPLE A** | **SAMPLE B** | **SAMPLE C** | **SAMPLE D** | **SAMPLE E** |
| (Rev, in-lbs) | 40 | 40+ | 40+ | 60+ | 40+ |
| | Severe | Slight cracks | Slight cracks | Slight cracks | Slight cracks |
| | cracks | Pass tape | Pass tape | Pass tape | Pass tape pull |
| | Fail tape | pull test | pull test | pull test | test |
| | pull test | | | | |

| **Hardness** (ASTMD 3363) | **SAMPLE A** | **SAMPLE B** | **SAMPLE C** | **SAMPLE D** | **SAMPLE E** |
|---|---|---|---|---|---|
| | 2H | 3H-4H | 4H | 3H-4H | 3H-4H |
| **CONCLUSION: Improves hardness** | | | | | |

A third embodiment of the invention includes utilizing a secondary curing agent, along with a primary curing agent, such as a diisocyanate, into the formulation to improve the mechanical properties such as flexibility and impact resistance of the coating. Such embodiment is useful for thermosetting fluorocarbon polymers having both hydroxyl and carboxyl groups in its backbone. LF-710F has such backbone chemistry.

Such thermosetting fluorocarbon polymers have major amounts of hydroxyl groups and minor amounts of carboxyl groups. Coating property improvements are believed to be attributed to the higher or more complete crosslinking achieved by reaction of the carboxyl group and secondary curing agent.

Secondary curing agents that may react with the carboxyl groups of the thermosetting fluorocarbon polymer include TGIC and HAA.

The following comparative examples illustrate the above improvement in mechanical properties of the coating obtained by use of primary and secondary curing agents.

### EXAMPLE3

| **THERMOSETTING FLUOROCARBON POLYMER AND SECONDARY CURATIVE (TGIC)** | | |
|---|---|---|
| **COMPOSITION** | **SAMPLE A** | **SAMPLE B** |
| LF-710F Thermosetting fluorocarbon polymer (Asahi Glass) | 650 | 650 |
| B1530 Isophorone diisocyanate (Huls) | 160 | 160 |
| PT810 TGIC (Ventico) | --- | 15 |
| **PROCESSING:** Electrostatic sprayed on substrates listed below to obtain coating thicknesses of 1.8-2.22 mils, except for chromated aluminum Q-panels where a coating thickness of 2.0-3.0 mils was used, and then cured at 400° F for 15 minutes | | |

| **TEST** | **TEST RESULTS** | |
|---|---|---|
| **Flexibility** (ASTM D522) | **SAMPLE A** | **SAMPLE B** |
| Non-treated aluminum Q-panel | ½" | <¼" |
| | Fail | Pass |
| | Severe cracks and | |
| | adhesion loss | |
| Non-treated cold roll steel Q-panel | ½" | <¼" |
| | Slight cracks | Pass |
| | Pass tape pull test | |
| Pretreated chromated aluminum Q-panel (Aladine) | ½" | <¼" |
| | Slight cracks | Pass |
| | Pass tape pull test | |
| Pretreated iron phosphated cold roll steel Q-panel (B 1000) | ½" | <¼" |
| | Slight cracks | Pass |
| | Pass tape pull test | |

| **CONCLUSION: Improves flexibility** | | |
|---|---|---|
| **Adhesion** (ASTM D3359) | **SAMPLE A** | **SAMPLE B** |
| Non-pretreated aluminum | 2B (lift of squares) | 5B, 100% Pass |
| All other types of substrates (cold roll steel, chromated aluminum, iron phosphated cold roll steel Q-panels, etc.) | 5B (100% Pass) | 5B, 100% Pass |

| CONCLUSION: Improves adhesion | | |
|---|---|---|
| **Pencil Hardness** (ASTM D3363) | 2H | 3H-4H |

| **CONCLUSION: Improves hardness** | | |
|---|---|---|
| **QUV Test** (ASTM D4587) | **SAMPLE A** | **SAMPLE B** |
| Initial Gloss (60 deg) | 49 | 35 |
| 2000 hrs | 46 | 36.7 |
| 4000 hrs | 49 | 35.7 |

| **CONCLUSION: No chalking, gloss reduction, and color change** | | |
|---|---|---|
| **SALT FOG TEST** (ASTM B117) | **SAMPLE A** | **SAMPLE B** |
| 4000 hrsCreepage | 2 mm | <1 mm |
| 4000 hrs Blisters | None | None |

Coatings produced from coating powders are used as surface protective coatings applied to substrates as a continuous film for the purpose of decorative appearance as well as protection of the substrate. Coating powders are applied to the substrate as a dry powder and heated to melt the powder particles into a continuous paint film, which can be fused and thermoset under heat.

Coating powders typically contain pigments, tinting agents, and various other additives. Pigments may be organic or inorganic and functionally contribute to opacity and color in addition to durability and hardness, although some coating powders contain little or no opacifying pigments and are described as clear coatings. Pigments ordinarily can include opacifying pigments such as titanium dioxide, zinc oxide, inorganic mixed metal pigments, as well as tinting pigments such as carbon black, yellow oxides, brown oxides, tan oxides, raw and burnt sienna or umber, chromium oxide green, phthalocyanine green, phthalonitrile blue, ultramarine blue, cadmium pigments, chromium pigments, and the like. Filler pigments such as clay, silica, talc, mica, wollastonite, barium sulphate, and the like can be added. Other additives include flow additive agents, degassing agents, resin modifiers, gloss control agents, antioxidants, UV absorbers, etc.

To produce coating powders, raw batch ingredients may be mixed in a high intensity mixer whereby the materials are discharged in a uniform mixture. The high intensity mixer discharges the batch components to a heated screw extruder wherein the extruder is internally heated. The exit extruder temperature is regulated according to the type of powder paint being produced but generally is between about 90° and about 150° C at the heated exit die of the screw fed extruder. The extrudate emerges from the extruder as a thin ribbon which passes onto a water-cooled stainless steel conveyor belt whereby the plastic ribbon extrudate fully hardens. The cooled extrudate then passes through a mechanical comminutor disposed at the end of the cooled stainless steel belt to efficiently break the fragile, brittle ribbon into very small flakes. The small flakes are then discharged onto a cooled mill, such as a hammer or air classifying mill, to grind the small particles onto coating powders of less than 325 mesh, and preferably passing a 200 mesh, U.S. Standard sieve screen whereupon the powder can be further classified into particle sizes, if desired.

## Claims

1. A coating powder comprising a thermosetting fluorocarbon polymer having hydroxyl functional groups, an effective amount of diisocyanate sufficient to cure the fluorocarbon polymer, and an effective amount of a thermoplastic fluorocarbon polymer to impart good corrosion resistance and mechanical properties to a coating formed upon subsequent thermal curing of said coating powder on a substrate.

2. The coating powder of claim 1, wherein said thermoplastic fluorocarbon polymer is present in an amount from about 5 wt% to about 40 wt%, based upon weight of the coating powder.

3. The coating powder of claim 2, wherein said thermoplastic fluorocarbon polymer is present in an amount of from about 5 wt% to about 25 wt%, based upon weight of the coating powder.

4. The coating powder of claim 2, wherein said thermoplastic fluorocarbon polymer is present in an amount of from about 25 wt% to about 40 wt%, based upon weight of the coating powder.

5. A thermally cured coating on a substrate having improved corrosion resistance comprising a thermosetting fluorocarbon polymer having been cured with diisocyanate and an effective amount of a thermoplastic fluorocarbon polymer to impart good corrosion resistance to said coating.

6. The thermally cured coating of claim 5, wherein said thermoplastic fluorocarbon polymer is present in an amount from about 5 wt% to about 40 wt%, based upon weight of coating powder used to form said coating.

7. The thermally cured coating of claim 6, wherein said thermoplastic fluorocarbon polymer is present in an amount from about 5 wt% to about 25 wt%, based upon weight of coating powder used to form said coating.

8. The thermally cured coating of claim 6, wherein said coating has a rough surface and said thermoplastic fluorocarbon polymer is present in an amount from about 25 wt% to about 40 wt%, based upon weight of coating powder used to form said coating.

9. A coating powder comprising a thermosetting fluorocarbon polymer having hydroxyl groups, an effective amount of diisocyanate sufficient to cure said fluorocarbon polymer, and an effective amount of a modifying ingredient that does not react with said thermosetting fluorocarbon polymer and is a member selected from the group consisting of a carboxyl acrylic polymer, a carboxyl polyester polymer, glycidyl methacrylate, polyanhydrides, glycidyl functional acrylics, and admixtures thereof to impart good mechanical properties to a coating formed upon subsequent thermal curing of said coating powder on a substrate, and an effective amount of an agent to effect crosslinking of said modifying ingredient.

10. The coating powder of claim 9, wherein said modifying ingredient is present in an amount of from about 5 wt% to about 40 wt %, based upon weight of the coating powder.

11. The coating powder of claim 9, further including an effective amount of thermoplastic fluorocarbon polymer to impart good corrosion resistance to a coating formed upon subsequent thermal curing of said coating powder on a substrate.

12. A thermally cured coating on a substrate having good mechanical properties comprising a thermosetting fluorocarbon polymer having been cured with diisocyanate and an effective amount of a modifying ingredient that does not react with said thermosetting fluorocarbon polymer and is a member selected from the group consisting of a carboxyl acrylic polymer, a carboxyl polyester polymer, glycidyl methacrylate, polyanhydrides, glycidyl functional acrylics, and admixtures thereof and to impart good mechanical properties to said coating, and an effective amount of an agent to effect crosslinking of said modifying ingredient.

13. The coating of claim 12, wherein said modifying ingredient is present in an amount of from about 5 wt% to about 40 wt%, based upon weight of the coating powder used to form said coating.

14. The coating of claim 12, wherein said coating further includes a thermoplastic fluorocarbon polymer to impart good corrosion resistance to a coating formed upon subsequent thermal curing of said coating powder on a substrate.

15. A thermosetting coating powder comprising a thermosetting fluorocarbon polymer having a major portion of hydroxyl and a minor portion of carboxyl groups, an effective amount of diisocyanate as a primary curing agent to cure said fluorocarbon polymer by reaction with said hydroxy groups, and an effective amount of a secondary curing agent to cure said fluorocarbon polymer by reaction with said carboxyl groups to impart good flexibility to a coating formed subsequently on a substrate.

16. The coating powder of claim 15, wherein said secondary curing agent comprises triglycidyl isocyanurate.

17. The coating powder of claim 15 further including a thermoplastic fluorocarbon polymer to impart good corrosion resistance to a coating formed upon subsequent thermal curing of said coating powder on a substrate.

18. The coating powder of claim 15 further including a modifying ingredient that does not react with said thermosetting fluorocarbon polymer and is a member of the group consisting of an carboxyl acrylic polymer, a carboxyl polyester polymer, glycidyl methacrylate, polyanhydrides, glycidyl functional acrylics, and admixtures thereof.

19. The coating powder of claim 18 further including a thermoplastic fluorocarbon polymer to impart good corrosion resistance to a coating formed upon subsequent thermal curing of said coating powder on a substrate.

20. A thermally cured coating on a substrate having good flexibility comprising a thermosetting fluorocarbon polymer having been cured with diisocyanate as a primary curing agent and with a secondary curing agent to impart good flexibility to said coating.

21. The coating of claim 20, wherein said secondary curing agent is triglycidyl isocyanurate.

22. The coating of claim 20 further including a thermoplastic polymer to impart good corrosion resistance to a coating formed upon subsequent thermal curing of said coating powder on a substrate.

23. The coating of claim 20 further including a modifying ingredient that does not react with said thermosetting polymer and is a member of the group consisting of a carboxyl acrylic polymer, a carboxyl polyester polymer, glycidyl methacrylate, polyanhydrides, glycidyl functional acrylics, and admixtures thereof.

24. The coating of claim 23 further including a thermoplastic polymer to impart good corrosion resistance to a coating formed upon subsequent thermal curing of said coating powder on a substrate.

25. A coating powder comprising a thermosetting fluorocarbon polymer having a major amount of hydroxyl functional groups and a minor amount of carboxyl functional groups; an effective amount of diisodyanate sufficient to cure the fluorocarbon polymer; a thermoplastic fluorocarbon polymer in an amount from about 5 wt % to about 40 wt%, based upon coating powder weight; a modifying ingredient that does not react with said thermosetting fluorocarbon polymer and is a member selected from the group consisting of a carboxyl acrylic polymer, a carboxyl polyester polymer, glycidyl methacrylate, polyanhydrides, glycidyl functional acrylics, and admixtures thereof in an amount from about 5 wt% to about 40 wt%, based upon coating powder weight; an effective amount of an agent to effect crosslinking of said modifying ingredient; and an effective amount of a secondary curing agent that reacts with carboxyl groups of said thermosetting fluorocarbon polymer.

26. A cured coating on a substrate made with the coating powder of claim 25.
